## Europäisches Patentamt
## European Patent Office
## Office européen des brevets

(19)

(11) Numéro de publication: **0 031 272**
**B1**

(12) # FASCICULE DE BREVET EUROPEEN

(45) Date de publication du fascicule du brevet:
**09.11.83**

(51) Int. Cl.³: **B 01 D 59/10**

(21) Numéro de dépôt: **80401754.9**

(22) Date de dépôt: **08.12.80**

(54) **Procédé et dispositif pour la séparation isotopique par diffusion gazeuse.**

(30) Priorité: **17.12.79 FR 7930862**

(43) Date de publication de la demande:
**01.07.81 Bulletin 81/26**

(45) Mention de la délivrance du brevet:
**09.11.83 Bulletin 83/45**

(84) Etats contractants désignés:
**BE CH DE GB IT LI NL**

(56) Documents cités:
**CH - A - 608 385**
**FR - A - 2 345 204**

(73) Titulaire: **COMMISSARIAT A L'ENERGIE ATOMIQUE**
**Etablissement de Caractère Scientifique Technique et**
**Industriel, B.P. 510, F-75752 Paris Cedex 15 (FR)**

(72) Inventeur: **Charpin, Jean, 38 bis, Avenue René Coty,**
**F-75014 Paris (FR)**
Inventeur: **Lerat, Bernard, 11, Avenue du Général**
**Pershing, F-78000 Versailles (FR)**
Inventeur: **Marcel, Raymond, 20, Hameau de la Goelette,**
**F-91650 Breuillet (FR)**
Inventeur: **Plurien, Pierre, 37, Résidence d'Ardenay,**
**F-91120 Palaiseau (FR)**

(74) Mandataire: **Mongrédien, André et al, c/o**
**BREVATOME 25, rue de Ponthieu, F-75008 Paris (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Procédé et dispositif pour la séparation isotopique par diffusion gazeuse

La présente invention a pour objet un procédé de séparation isotopique par diffusion gazeuse au moyen de barrières poreuses.

De façon plus précise, elle concerne un procédé de séparation isotopique qui permet d'améliorer les conditions de fonctionnement d'une installation de diffusion gazeuse, notamment en diminuant l'énergie consommée dans une telle installation.

Les dispositifs connus actuellement pour assurer la séparation d'isotopes par diffusion gazeuse sont généralement constitués par un assemblage de barrières poreuses ayant la forme de tubes cylindriques microporeux à l'intérieur desquels on fait circuler en régime turbulent le mélange gazeux à séparer.

Par passage dans ces tubes, le mélange gazeux est séparé en une fraction enrichie en isotope léger qui diffuse au travers de la paroi des tubes et en une fraction appauvrie en isotope léger qui est évacuée à la sortie des tubes.

Etant donné que le franchissement d'une barrière poreuse ne conduit qu'à un enrichissement très faible du mélange gazeux, il est nécessaire pour obtenir un enrichissement appréciable en isotope léger de renouveler cette opération un grand nombre de fois.

De ce fait, une installation de séparation d'isotopes par diffusion gazeuse comprend généralement un grand nombre d'étages élémentaires groupés en cascade, chaque étage élémentaire étant constitué par un assemblage de barrières poreuses.

Selon le type de cascade le plus courant, les étages sont groupés de façon à ce que la fraction enrichie sortant d'un étage soit envoyée à l'étage suivant, tandis que la fraction appauvrie sortant de ce même étage est envoyée à l'étage précédent. Avant d'être introduites dans leurs étages respectifs, les fractions enrichie et appauvrie sortant d'un étage doivent être comprimées pour que leur pression soit ramenée à la valeur choisie pour la diffusion.

De ce fait, l'énergie nécessaire pour le fonctionnement d'une telle installation, soit la puissance consommée en particulier pour réaliser ces diverses compressions, est très importante, en raison du grand nombre d'étages.

La présente invention a précisément pour objet un procédé de séparation isotopique par diffusion gazeuse qui permet de diminuer de façon notable l'énergie spécifique (puissance consommée par unité de travail de séparation en KWh/UTS) d'une installation de séparation isotopique, grâce à l'utilisation de barrières poreuses présentant des caractéristiques particulières, et grâce au régime d'écoulement établi dans ces barrières.

A cet effet, le procédé de séparation isotopique par diffusion gazeuse selon l'invention se caractérise en ce que l'on utilise pour ladite, séparation des tubes capillaires microporeux présentant un diamètre hydraulique D défini par la formule $D = 4\,S/P$ dans laquelle S représente la surface de la section transversale du conduit interne défini par ledit tube et P le périmètre de cette section transversale, inférieur à 0,5 cm, et en ce que l'on met en circulation le mélange gazeux à séparer dans lesdits tubes de façon à établir dans ces derniers un écoulement tel que le nombre de Reynolds à l'entrée desdits tubes soit inférieur à 4000 et superieur à 200.

Avantageusement, on met en circulation ledit mélange gazeuse de façon à établir un écoulement enrégime laminaire dudir melange, le nombre de Reynolds à l'entrée desdits tubes étant inférieur à 2000 et supérieur à 200.

L'invention a également pour objet un dispositif de séparation isotopique pour la mise en oeuvre de ce procédé.

Ce dispositif se caractérise en ce qu'il comprend au moins un assemblage de tubes capillaires microporeux présentant un diamètre hydraulique D défini par la formule $D = 4.S/P$ dans laquelle S représente la surface de la section transversale du conduit interne défini par ledit tube et P le périmètre de cette section transversale, inférieur à 0,5 cm.

De façon avantageuse, le rayon moyen de pores desdits tubes est inférieur à 200 Å.

De façon avantageuse, la longueur desdits tubes capillaires microporeux est supérieure à 25 cm.

De préférence, les tubes capillaires ont une épaisseur comprise entre 20 et 500 microns, une porosité comprise entre 10 et 60% et une perméabilité à l'air comprise entre $10 \cdot 10^{-7}$ et $100 \cdot 10^{-7}$ mole/cm$^2 \times$ mn $\times$ cm de mercure.

Selon une caractéristique avantageuse de ce dispositif, lesdits tubes sont en un matériau inorganique choisi dans le groupe comprenant l'alumine, la magnésie, l'oxyde de titane, la silice, l'oxyde de chrome, les oxydes mixtes d'aluminium et de magnésium et le nickel, ainsi que certains fluorures métalliques tels que les fluorures de magnésium et de nickel.

Selon une autre caractéristique avantageuse de ce dispositif, lesdits tubes sont en matériau organique, par exemple en polytétrafluoroéthylène.

Selon l'invention, les tubes microporeux utilisés peuvent avoir une section circulaire ou encore une section polygonale, par exemple une section carrée ou rectangulaire.

En effet, on précise que dans le présent texte, il convient d'entendre par »tube« une surface cylindrique engendrée par le déplacement d'une droite ou génératrice assujettie, d'une part, à rester parallèle à une direction fixe, et d'autre part, à rencontrer une courbe plane fermée et fixe, ou directrice, dont le plan coupe la direction donnée.

Ainsi, un tube peut présenter une section transversale circulaire, elliptique, carrée, polygonale, ou toute autre forme, selon que la directrice est constituée par un cercle, une ellipse, un carré, un polygone ou autre.

Les tubes capillaires microporeux présentant les caractéristiques précitées peuvent être fabriqués par tout procédé connu, par exemple:

— par filage, coulage, extrusion, suivis ou non d'une compression isostatique et d'un traitement chimique et/ou thermique;
— par dépôt sur une âme suivie d'une compression isostatique et d'un traitement thermique, ce dépôt pouvant notamment être effectué par pulvérisation, trempée ou électrophorèse.

La mise en oeuvre, dans le procédé de séparation isotopique par diffusion gazeuse de l'invention, de barrières poreuses ayant la forme de tubes capillaires de diamètre hydraulique inférieur à 0,5 et d'une longuéur d'au moins 25 cm, et l'établissement à l'intérieur de ces tubes d'une circulation du mélange gazeux à séparer en régime laminaire, permet d'obtenir une amélioration du rendement aérodynamique des tubes, ce qui conduit de plus à une réduction importante de la perte de charge à l'intérieur de chaque tube.

Cette amélioration du rendement aérodynamique et cette limitation à une valeur plus faible de la perte de charge à l'intérieur des tubes se traduisent par un gain en énergie spécifique.

On rappelle que l'énergie spécifique d'un étage d'une installation de séparation isotopique, soit l'énergie spécifique d'une barrière poreuse, correspond au rapport:

$$\frac{W}{\delta U}$$

dans lequel W représente l'énergie consommée et $\delta U$ le travail de séparation.

L'énergie consommée W est la somme de l'énergie W' nécessaire pour comprimer à la pression d'entrée $p_e$ le débit diffusé sortant de l'étage $(n-1)$ à la pression $p_{av}$, et de l'énergie W'' nécessaire pour comprimer à la pression d'entrée $p_e$ le débit pauvre sortant de l'étage $(n+1)$ à la pression $p_s$.

Dans un diffuseur à l'équilibre, le débit diffusé et le débit pauvre sont égaux à $\frac{Qe}{2}$, Qe étant le débit d'entrée de chaque étage.

Les énergies W' et W'' correspondant à une compression adiabatique de rendement $\eta_c$ à la température $T_c$ sont données par les formules:

$$W' = \frac{\gamma}{\gamma-1} \; \frac{Qe}{2M} \; \frac{RT_c}{\eta_c} \left( \tau_c \frac{\gamma-1}{\gamma} - 1 \right)$$

$$W'' = \frac{\gamma}{\gamma-1} \; \frac{Qe}{2M} \; \frac{RT_c}{\eta_c} \left( \tau_r \frac{\gamma-1}{\gamma} - 1 \right)$$

dans lesquelles, pour l'hexafluorure d'uranium

$$\gamma = \frac{Cp}{Cv}$$

soit 1,065:

$$M = 0,238 \, kg;$$

$$R = 8,314 \, joules;$$

$\tau_c$ est le taux de compression du gaz diffusé égal à $\frac{p_e}{p_{av}}$;

$\tau_r$ est le taux de compression du gaz pauvre égal à $\frac{p_e}{p_s}$.

Le travail de séparation $\delta U$ est donné par la formule:

$$\delta U = \frac{1}{2} \; Qe \; \frac{\theta}{1-\theta} \; \varepsilon^2$$

dans laquelle $\theta$ est le coefficient de partage entre flux enrichi et appauvri, soit 0,5 dans un diffuseur à l équilibre, et $\varepsilon$ le coefficient de séparation isotopique de l'étage donné par la formule

$$\varepsilon = \varepsilon_o \; SZ \frac{1-\theta}{\theta} \; Log \frac{1}{1-\theta}$$

dans laquelle:

$$\varepsilon_o = 43 \cdot 10^{-4} \text{ pour } UF_6;$$

S est le rendement de séparation de la barrière microporeuse, donné par la formule:

$$S = \left(1 - \frac{1}{\tau_c}\right) \exp. - \frac{p_e - p_{av}}{p}$$

où p est une constante donnée par la relation:

$$\frac{1}{p} = 3,8 \times \frac{3 r_p}{16 \eta \overline{V}_2}$$

$\eta$: viscosité du gaz à la température du procédé;

$\overline{V}_2$: vitesse moyenne de l'isotope lourd;

$r_p$: rayon moyen de pores;

$p_e$: pression amont;

$p_{av}$: pression aval;

Z est le rendement aérodynamique donné en régime laminaire par la formule:

$$Z = 1 - \underline{a} \frac{R_e r_h}{L}$$

dans laquelle $R_e$ est le nombre de Reynolds à l'entrée de la barrière microporeuse, $r_h$ le rayon hydraulique du tube capillaire, et L la longueur du tube capillaire et a un coefficient qui dépend de la section du tube. Dans le cas de tubes capillaires de section circulaire, a est égal à 0,04511.

Dans le cas de l'hexafluorure d'uranium, l'énergie spécifique peut ainsi être représentée par la formule:

$$\frac{W}{\delta U} = 17,9 T_c \frac{\tau_c 0,061 + \tau_r 0,061 - 2}{\eta_c S^2 Z^2}$$

Dans cette formule,

$$\frac{W}{\delta U}$$

est en KW heure/UTS, $\delta U$ est calculé avec Qe exprimé en kilogrammes d'uranium par an.

Aussi, avec le procédé de l'invention qui conduit à une augmentation de la valeur du rendement aérodynamique Z et à une diminution de la valeur $\tau_r$, on obtient une énergie spécifique plus faible.

On voit aussi d'après cette relation qu'il y a intérêt à travailler avec la plus grande valeur possible de S; ceci conduit pratiquement à limiter les valeurs du rayon de pores moyen au-dessous de 200 Å.

Selon un premier mode de réalisation du dispositif de l'invention, l'assemblage de tubes capillaires microporeux est constitué de tubes microporeux disposés parallèlement les uns aux autres et assujettis à chacune de leurs extrémités à une plaque, dite plaque d'assemblage, lesdits tubes étant répartis dans ledit assemblage selon des rangées parallèles à une direction donnée, dite première direction, en formant également des rangées parallèles à une deuxième direction perpendiculaire à ladite première direction.

Avantageusement, dans ce premier mode de réalisation, les tubes capillaires microporeux ont une section circulaire, et les tubes de chaque rangée parallèle à la première direction sont en contact tangentiel les uns avec les autres.

Ce mode de réalisation de l'assemblage se révèle particulièrement avantageux car il conduit à un assemblage très compact comportant un grand nombre de tubes capillaires sans créer pour autant de perturbations dans l'écoulement du gaz ayant diffusé au travers de la paroi des tubes.

En effet, la présence entre les rangées de tubes de couloirs de réception permet de canaliser le gaz diffusé et d'éviter ainsi d'obtenir des pertes de charge importantes dans le circuit du gaz séparé par diffusion.

Selon une variante de ce premier mode de réalisation, les tubes capillaires microporeux sont régulièrement espacés les uns des autres dans chacune des rangées parallèles à la première ou à la seconde direction.

Dans ce cas, la distance $d_1$ entre les plans définis par les axes des tubes de deux rangées adjacentes, parallèles à la première direction, est de préférence supérieure à la distance $d_2$ entre les axes de deux tubes adjacents d'une rangée parallèle à la première direction.

De préférence encore, lorsque les tubes ont une section circulaire, la distance $d_2$ est telle que la valeur de $(d_2 - d_{ext})$ dans laquelle $d_{ext}$ désigne le diamètre extérieur des tubes, soit au plus égale à 2 mm et la distance $d_1$ est telle que la valeur de $(d_1 - d_{ext})$ soit comprise entre 0,5 et 3 mm.

Selon un second mode de réalisation, l'assemblage de tubes microporeux est constitué de tubes microporeux disposés parallèlement les uns aux autres et formant dans ledit assemblage une première série de conduits, dits premiers conduits, délimités par la paroi interne desdits tubes, et cet assemblage comprend une pluralité de cloisons longitudinales solidaires d'au moins certains desdits tubes et réparties entre lesdits tubes de façon à délimiter avec la paroi externe de ces derniers une seconde série de conduits, dits seconds conduits, parallèles aux premiers conduits.

Dans ce second mode de réalisation, lesdits tubes et lesdites cloisons sont avantageusement agencés entre eux de façon telle que lesdite seconds conduits aient tous la même section transversale, et, de préférence, une section transversale telle que le rapport de la section transversale desdits seconds conduits à la section transversale desdits premiers conduits soit compris entre 1 et 20.

Selon une caractéristique de ce second mode de réalisation, les tubes dudit assemblage sont montés sur deux plaques, lesdites cloisons s'étendent de l'une à l'autre desdites plaques, et elles présentent des ouvertures pour assurer l'évacuation du gaz séparé circulant dans lesdits seconds conduits.

Selon une variante, les tubes dudit assemblage sont montés sur deux plaques, lesdites cloisons s'étendent de l'une desdites plaques jusqu'à proximité de l'autre desdites plaques de façon à ménager au voisinage de l'autre desdites plaques des ouvertures pour assurer l'évacuation du gaz séparé circulant dans lesdits seconds conduits.

Dans ce second mode de réalisation, la présence de cloisons longitudinales qui délimitent en partie dans ledit assemblage des conduits de réception du gaz séparé par diffusion au travers de la paroi des tubes, permet d'améliorer le rendement de séparation de l'installation en créant un effet de contre-courant, c'est-à-dire en obligeant le gaz séparé à circuler dans les seconds conduits en sens inverse du mélange gazeux à séparer qui circule dans les premiers conduits.

Ce résultat peut être obtenu par exemple en ménageant dans les cloisons longitudinales des ouvertures disposées de façon à permettre uniquement une évacuation du gaz séparé circulant dans les seconds conduits au voisinage immédiat de l'extrémité des tubes qui correspond à l'entrée du mélange gazeux à séparer.

Par ailleurs, la présence des cloisons longitudinales confère à un tel assemblage une bonne résistance mécanique due au grand moment d'inertie transversal du système et au réseau très serré des cloisonnements, ce qui permet également d'obtenir une perte de charge faible ou négligeable dans les seconds conduits où circule le gaz séparé par diffusion.

De préférence, les cloisons dudit assemblage sont réalisées dans le même matériau que lesdits tubes.

Dans ce cas, l'assemblage comportant plusieurs tubes réunis par des cloisons longitudinales peut être fabriqué directement sous sa forme définitive à partir d'une pâte de matériau microporeux organique ou inorganique, par exemple par extrusion de la pâte au travers d'une filière de géométrie adaptée à la forme de l'assemblage à obtenir, cette extrusion étant suivie d'un traitement chimique et/ou thermique de l'assemblage ainsi obtenu.

La pâte d'extrusion utilisée peut être constituée par tout matériau d'extrusion classique répondant aux conditions exigées pour l'utilisation de l'assemblage. Avantageusement, la pâte d'extrusion comprend des grains d'oxyde métallique tels que l'alumine, la magnésie, l'oxyde de titane et la silice qui sont enrobés par exemple de liants organiques, de préférence thixotropiques tels que le mélange sérésine terpinéal. D'autres liants tels que les liants à l'eau, notamment de la famille de la gomme adragante ou encore des liants thermoplastiques, peuvent être utilisés.

En choisissant une filière de géométrie appropriée, on peut ainsi obtenir en une seule opération un ensemble de tubes microporeux réunis par des cloisons longitudinales.

Les ouvertures dans les cloisons peuvent être réalisées au cours de l'opération d'extrusion ou après cuisson de l'assemblage obtenu, par exemple par usinage mécanique ou par découpage par rayonnement laser.

De préférence, on réalise ces ouvertures au cours de l'opération d'extrusion en arrêtant l'injection de la pâte au moyen d'un peigne aux endroits qui correspondent aux cloisons, de façon à interrompre ces cloisons sur une longueur qui représente par exemple 10% de la longueur totale des tubes, de préférence au niveau de l'une de leurs extrémités.

Toutefois, de tels assemblages peuvent être obtenus également en réalisant par extrusion des rangées de tubes et en assemblant ensuite ces rangées de tubes au moyen d'entretoises fixées sur certains des tubes par des techniques classiques.

Selon un troisième mode de réalisation de l'invention, l'assemblage est constitué par un module alvéolaire dont les parois réalisées en matériau microporeux ayant un rayon moyen de pores inférieur à 200 Å définissent des rangées de canaux parallèles ayant une section transversale carrée ou rectangulaire, lesdites rangées constituant alternativement une première série de conduits, dits premiers conduits, qui présentent un diamètre hydraulique inférieur à 0,5 cm et dans lesquels on met en circulation le mélange gazeux à séparer, et une deuxième série de conduits, dits seconds conduits, dans lesquels on recueille le gaz séparé par diffusion au travers de la paroi desdits premiers conduits.

Avantageusement, dans ce troisième mode de réalisation, ces seconds conduits sont obturés à chacune de leurs extrémités, des ouvertures étant ménagées dans chaque rangée desdits seconds conduits de façon à assurer l'évacuation du gaz séparé par les parois latérales du module.

Selon l'invention, le dispositif de séparation isotopique comprend de préférence plusieurs assemblages de tubes capillaires microporeux. Dans ce cas, le dispositif comprend avantageusement une enceinte cylindrique dans laquelle sont disposés à la suite l'un de l'autre une pluralité d'assemblages de tubes microporeux parallèles à l'axe de l'enceinte, lesdits assemblages étant montés chacun entre deux plaques dites plaques de diffuseurs et séparés les uns des autres de façon à ménager entre deux assemblages voisins et à chacune des extrémités de l'enceinte des chambres successives qui constituent alternativement des chambres de distribution du mélange gazeux à séparer dans les tubes microporeux débouchant dans ces dernières et des chambres de collection du gaz sortant des tubes débouchant dans ces dernières, des moyens pour alimenter lesdites chambres de distribution en mélange gazeux à séparer, des moyens pour extraire desdites chambres de collection le gaz sortant des tubes desdits assemblages et des moyens pour recueillir le gaz ayant diffusé au travers de la paroi de tubes de chacun desdits assemblages.

L'invention sera mieux comprise à la lecture de la description qui suit, donnée à titre d'exemple non limitatif et se référant au dessin annexé sur lequel:

— la figure 1 représente en coupe verticale un dispositif de séparation isotopique selon l'invention;

— la figure 2 représente en coupe verticale un assemblage de tubes capillaires du dispositif de la figure 1;

— la figure 3 représente en partie un tube capillaire de l'assemblage de la figure 2;

— la figure 4 est une coupe horizontale selon la ligne I-I de l'assemblage de la figure 2;

— la figure 5 représente un premier mode de montage d'un assemblage de tubes capillaires sur la plaque supérieure du dispositif de séparation isotopique;

— la figure 6 représente un second mode de montage d'un assemblage de tubes capillaires sur la plaque supérieure du dispositif de séparation isotopique;

— la figure 7 représente une vue en perspective d'un premier mode d'assemblage de tubes capillaires microporeux;

— la figure 8 illustre un exemple de réalisation de ce premier mode d'assemblage;

— la figure 9 illustre un autre exemple de réalisation de ce premier mode d'assemblage;

— la figure 10 représente une vue en perspective d'un second mode d'assemblage des tubes, selon l'invention;

— la figure 11 illustre en détail le mode de montage des tubes sur une plaque d'extrémité de l'assemblage de la figure 10;

— les figures 12, 13, 14 et 15 sont des coupes horizontales de différents exemples de réalisation du second mode d'assemblage de tubes microporeux, selon l'invention;

— la figure 16 illustre un assemblage correspondant au troisième mode de réalisation de l'invention, et

— la figure 17 représente en coupe verticale un dispositif de séparation isotopique par diffusion gazeuse comprenant plusieurs assemblages de tubes microporeux.

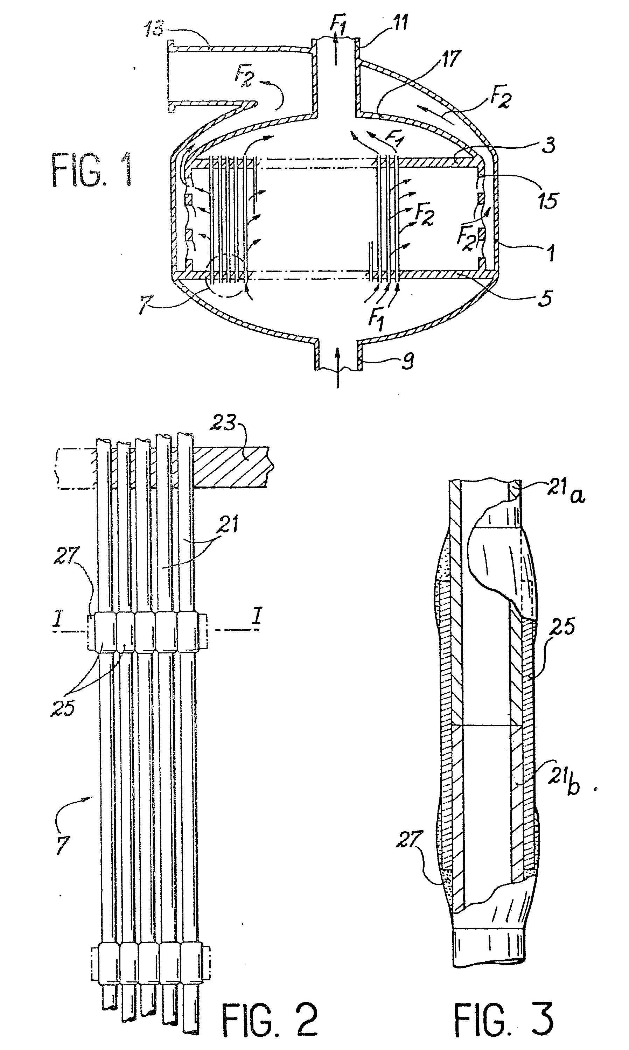

Dans les modes de réalisation requientés sur les figures 1 à 14, tous les tubes microporeux sent de section circulaire.

Sur la figure 1, on voit un dispositif de séparation isotopique comprenant une enceinte 1 à l'intérieur de laquelle sont montés verticalement entre deux plaques horizontales 3 et 5 dites plaques de diffuseur, des assemblages 7 de tubes capillaires microporeux ayant un diamètre interne au plus égal à 0,5 cm, avantageusement inférieur à 0,25 cm et de préférence inférieur à 0,12 cm. Les plaques de diffuseur sont pourvues d'ouvertures pour la mise en place de chaque assemblage et elles sont réalisées par exemple en métal tel que l'acier inoxydable, le Monel, ou un acier revêtu pour résister à la corrosion, ou encore en matière plastique telle que le téflon.

La plaque inférieure 5 délimite à la base de l'enceinte 1 une chambre d'introduction du mélange gazeux à séparer amené sous haute pression par la canalisation 9.

Ce mélange gazeux passe ensuite dans les assemblages 7 de tubes capillaires dans lesquels il est séparé en une fraction appauvrie qui est évacuée sous haute pression en suivant le trajet des flèches $F_1$ par la canalisation 11 et en une fraction enrichie par diffusion au travers de la paroi des tubes capillaires qui est évacuée, sous basse pression, en suivant le trajet des flèches $F_2$, par la canalisation 13.

Dans le mode de réalisation illustré sur cette figure, les plaques 3 et 5 sont reliées entre elles par une cloison verticale ajourée 15 qui délimite avec la paroi interne de l'enceinte 1 un passage annulaire pour l'évacuation des gaz à basse pression vers la canalisation 13.

La plaque supérieure 3 est surmontée d'un dôme 17 qui délimite avec la plaque 3 une chambre collectrice des gaz à haute pression.

Comme on peut le voir sur la figure 2, un assemblage 7 est constitué par une pluralité de tubes capillaires microporeux 21 disposés parallèlement les uns aux autres et assujettis à chacune de leurs extrémités à une plaque dite plaque d'assemblage dont seule la plaque supérieure 23 est représentée sur cette figure.

Ces plaques d'assemblage sont munies d'ouvertures circulaires de diamètre sensiblement égal au diamètre extérieur des tubes capillairess 21 et elles sont avantageusement réalisées en métal tel que le nickel ou l'aluminium. L'étanchéité au niveau des passages des tubes 21 dans les ouvertures des plaques d'assemblages 23 est réalisée par exemple au moyen d'un verre phosphaté tel que le P 106.

Comme on peut le voir plus en détail sur la figure 3, les tubes capillaires microporeux 21 de l'assemblage 7 sont constitués de tubes capillaires élémentaires tels que 21a et 21b assemblés bout à bout au moyen de manchons cylindriques 25 réalisés par exemple en aluminium ou en nickel, et ayant par exemple une épaisseur d'environ 0,2 mm. L'étanchéité entre le manchon 25 et les tubes élémentaires 21a et 21b est réalisée par un dépôt 27 de poudre d'aluminium ou d'alumine appliquée par exemple par pulvérisation ou par schoopage.

L'étanchéité entre les tubes 21a et 21b peut également être réalisée au moyen de verres phosphatés résistant à l'hexafluorure d'uranium comme le »P 106«, ou de verres fluorés ou encore au moyen de colles ou d'émulsions à base de polytétrafluoroéthylène.

De préférence, selon l'invention, les tubes élémentaires 21a et 21b ont une épaisseur comprise entre 20 et 500 microns, une porisité de 10 à 60%, une perméabilité à l'air comprise entre $10 \cdot 10^{-7}$ et $100 \cdot 10^{-7}$ mole/cm² par minute par centimètre de mercure.

Les tubes capillaires 21 ont de préférence une longueur supérieure à 50 cm, et ils comprennent généralement plusieurs tubes élémentaires tels que 21a assemblés bout à bout.

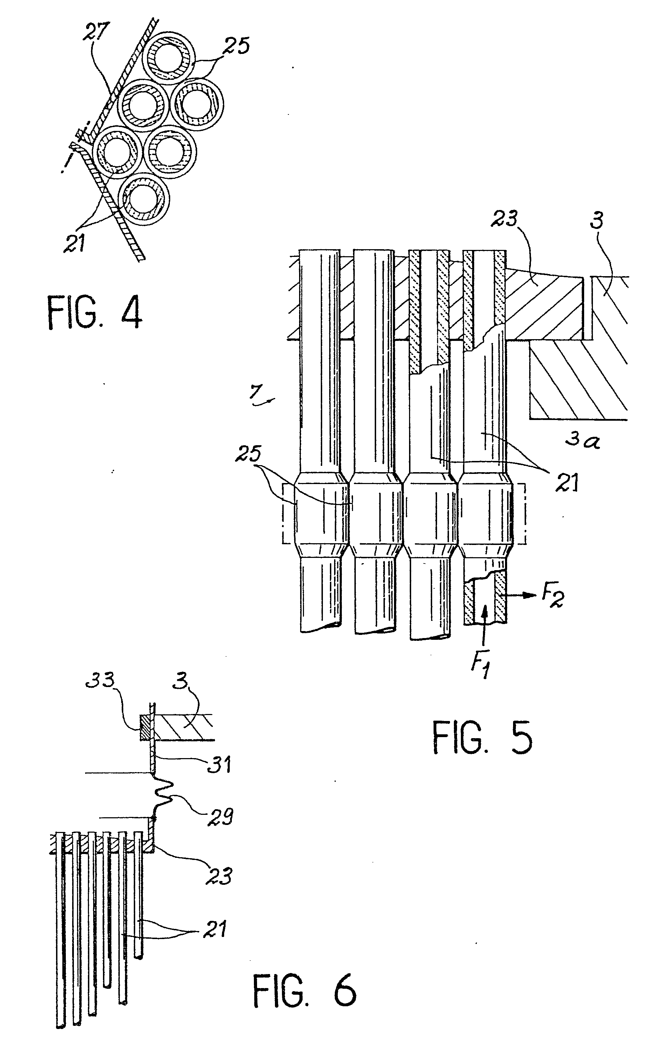

Comme on peut le voir sur les figures 2 et 4, les tubes 21 d'un assemblage 7 sont maintenus radialement par des moyens de serrage élastique 27 au niveau des manchons 25, ces manchons 25 étant ainsi en contact les uns avec les autres et assurant de plus le maintien des tubes 21 à un écartement donné qui correspond à l'épaisseur des manchons 25.

Ces moyens de serrage élastique sont constitués par exemple par des bandes de feuillard métallique ou de matière plastique telle que le téflon.

De la sorte, les tubes sont assemblés selon un motif hexagonal.

Les tubes 21 peuvent aussi être assemblés en faisceau hexagonal et maintenus à un écartement voulu au moyen d'une toile métallique ou plastique à maille carrée de côté sensiblement égal au diamètre externe des tubes en disposant les tubes 21 dans les emplacement de la toile métallique qui correspondent à une maille sur deux.

Ainsi, un assemblage de trois cents tubes de 1 mm de diamètre externe occupera une section transversale de 6,65 cm², ce qui représente un faisceau cylindrique de 29 mm de diamètre.

En se reportant maintenant aux figures 5 et 6, on peut voir deux modes de montage d'un assemblage dans une ouverture correspondante de la plaque supérieure 3 de diffuseur.

Sur la figure 5, le montage de l'assemblage 7 sur la plaque de diffuseur 3 rest réalisé par l'intermédiaire de la plaque d'assemblage 23 qui vient en appui sur un épaulement 3a de l'ouverture correspondante de la plaque 3 du diffuseur.

Dans le mode de montage représenté sur la figure 6, la plaque d'assemblage 23 est reliée par l'intermédiaire d'un soufflet métallique 29 à une pièce annulaire métallique 31 dont le bord libre est rendu solidaire du bord de l'ouverture de la plaque 3, par exemple par l'intermédiaire d'une bague 33.

Le diffuseur comprend avantageusement mille assemblages comportant chacun trois cents tubes capillaires microporeux. Ces assemblages sont disposés suivant un motif hexagonal dans les ouvertures correspondantes, d'environ 30 mm de diamètre des plaques 3 et 5, la distance entre les centre des assemblages étant environ de 37 mm.

Les mille assemblages occupent ainsi une section transversale de 4,74 m², ce qui correspond à une section circulaire de 2,46 m de diamètre.

Dans un dispositif de séparation isotopique de ce type, comportant des tubes capillaires de 0,06 cm de diamètre, le débit d'entrée d'un tube est de 0,0106 g d'$UF_6$/sec. Aussi, le débit total du dispositif comportant mille assemblages de trois cents tubes sera de 3,18 kg d'$UF_6$/sec.

Pour éviter les pertes de charge, les diamètres des canalisations 9, 11, 13 sont calculés pour que la vitesse du gaz dans chacun de ces canalisations soit de 2 m/sec.

A titre d'exemple, on donne ci-après deux exemples de réalisation d'installation de séparation des isotopes de l'uranium par diffusion d'hexafluorure d'uranium au travers de tubes capillaires microporeux.

#### Exemple 1

Les caractéristiques de tubes en alumine sont les suivantes:

— section circulaire;
— longueur: 100 cm;
— diamètre interne: 0,06 cm;
— épaisseur: 330 microns;
— porosité: 0,2;
— rayon moyen de pores: 91 Å;
— perméabilité à l'air à 20° C:

$31 \cdot 10^{-7}$ mole/cm² par minute par centimètre de Hg.

Dans les conditions suivantes de fonctionnement:

— température: 70°C;
— pression à l'entrée des tubes:
  $p_e = 1$ bar;
— nombre de Reynolds: $R_e = 1\,100$;
— pression aval: $p_{av} = \dfrac{p_e}{4,5}$ ;
— perte de charge dans le tube:
  34 millibars;
— débit d'entrée:
  $3,03 \cdot 10^{-5}$ mole par seconde, soit
  0,0106 g d'UF$_6$ par seconde;
— débit diffusé = débit pauvre:
  0,005324 g d'UF$_6$ par seconde.

On obtient avec une telle installation une diminution d'environ 33% de l'énergie spécifique par rapport à une installation classique.

Exemple 2

Les caractéristiques des tubes sont les suivantes:

— section circulaire
— longueur: 100 cm;
— diamètre interne: 0,06 cm;
— épaisseur: 360 microns;
— porosité: 0,2;
— perméabilité à l'air 20°C:
  $34 \cdot 10^{-7}$ mole par cm² par minute par centimètre de Hg;
— rayon moyen de pores: 105 Å.

Dans les conditions suivantes de fonctionnement:

— température: 100°C;
— nombre de Reynolds: 1100;
— pression à l'entrée: $P_e = 1$ bar;
— pression aval: $\dfrac{p_e}{4,5}$ ;
— perte de charge dans le tube:
  44 millibars;
— débit d'entrée:
  0,0106 g d'UF$_6$ par seconde;
— débit diffusé = débit pauvre:
  0,005325 g d'UF$_6$ par seconde.

On obtient avec une telle installation une diminution d'énergie spécifique d'environ 28% par rapport à une installation classique.

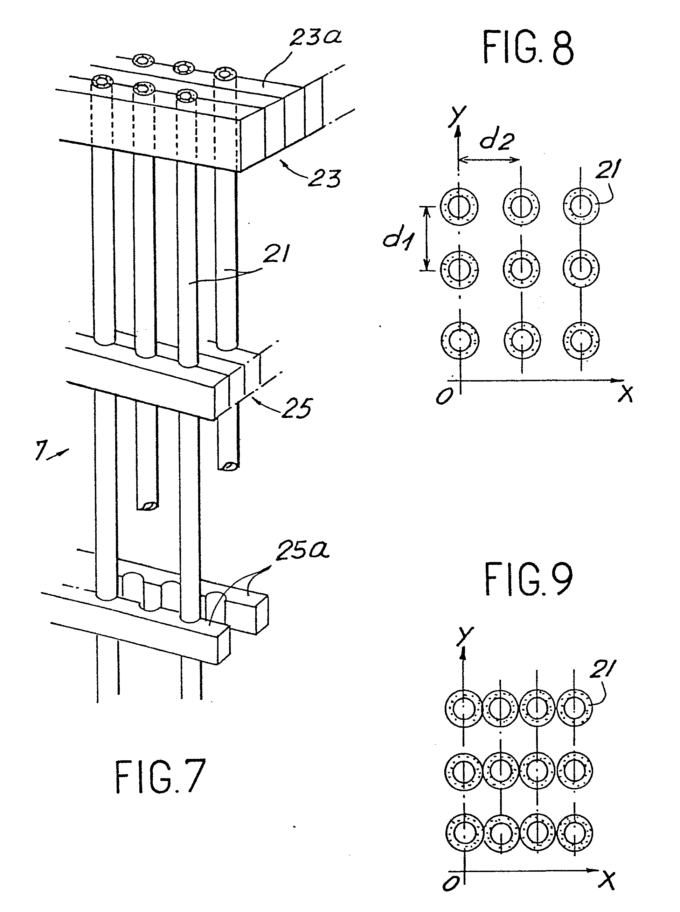

Sur la figure 7, on a représenté en perspective un assemblage 7 de tubes capillaires microporeux correspondant au premier mode de réalisation de l'invention. Dans cet assemblage, les tubes capillaires microporeux 21 sont montés à leur extrémité sur une plaque 23 réalisée à partir d'éléments unitaires 23a soudés entre eux.

En se reportant à la figure 8, on voit que dans ce premier mode de réalisation, les tubes microporeux 21 sont répartis selon des rangées parallèles à une première direction OX, le plan défini par les axes des tubes d'une rangée étant à une distance $d_1$, supérieure au diamètre externe $d_{ext}$ desdits tubes, du plan défini par les axes des tubes d'une rangée adjacente.

Comme on peut le voir sur cette figure, les tubes microporeux 21 sont de plus répartis de façon à former également des rangées de tubes parallèles à une seconde direction OY perpendiculaire à la première direction OX.

Dans une rangée parallèle à la direction OX, les tubes sont espacés régulièrement les uns des autres à une distance $d_2$ qui représente l'intervalle séparant les axes de deux tubes adjacents.

De préférence, selon l'invention, la distance $d_1$ est supérieure à la distance $d_2$, de façon à définir entre les rangées de tubes parallèles à la première direction OX des couloirs qui favorisent un écoulement approprié du mélange gazeux ayant diffusé au travers de la paroi des tubes 21, ce qui permet d'obtenir ainsi un assemblage très compact en minimisant les pertes de charge entre les tubes pour le mélange gazeux diffusé au travers de la paroi des tubes.

Comme représenté sur la figure 7, les tubes 21 sont montés de façon étanche à leurs extrémités sur des plaques 23 dont une seule est représentée sur le dessin, réalisées par exemple en téflon. La plaque 23 est formée à partir d'éléments unitaires 23a qui présentent un profil tel que deux éléments 23a puissent entourer complètement soit une rangée de tubes parallèles à la première direction OX, soit une rangée de tubes parallèles à la seconde direction OY, les éléments 23a étant soudés entre eux, par exemple par pressage à chaud, pour former une plaque 23 dans laquelle sont montées de façon étanche les extrémités des tubes 21.

Les tubes 21 peuvent être maintenus à un écartement approprié par des entretoises 25 réparties à différents niveaux de l'assemblage 7, ces entretoises 25 pouvant être réalisées également à partir de pièces élémentaires du même type 25a que celles qui constituent les plaques 23, sans qu'il soit cependant nécessaire de solidariser étroitement ces pièces entre elles pour obtenir un système étanche.

Sur la figure 9, on a représenté un autre exemple de réalisation de l'assemblage 7 qui se différencie du mode de réalisation de la figure 8 par le fait que les tubes microporeux 21 des rangées parallèles à la première direction OX sont en contact tangentiel les uns avec les autres.

De la sorte, on définit entre les rangées de tubes parallèles à la première direction OX des couloirs dans lesquels circule le mélange gazeux ayant diffusé au travers de la paroi des tubes, ce qui permet d'améliorer encore la compacité d'un assemblage de ce type grâce à l'écoulement préférentiel du gaz diffusé dans les couloirs ainsi constitués, ce qui permet d'éviter des pertes de charge importantes dans le circuit de gaz diffusé.

On précise que, de préférence, lorsque la géométrie d'ensemble du dispositif de séparation isotopique s'y prête, ces assemblages de tubes sont disposés dans le dispositif de façon telle que les couloirs formés entre les rangées de tubes parallèles à la direction OX soient sensiblement dans l'axe de la canalisation de sortie du gaz diffusé.

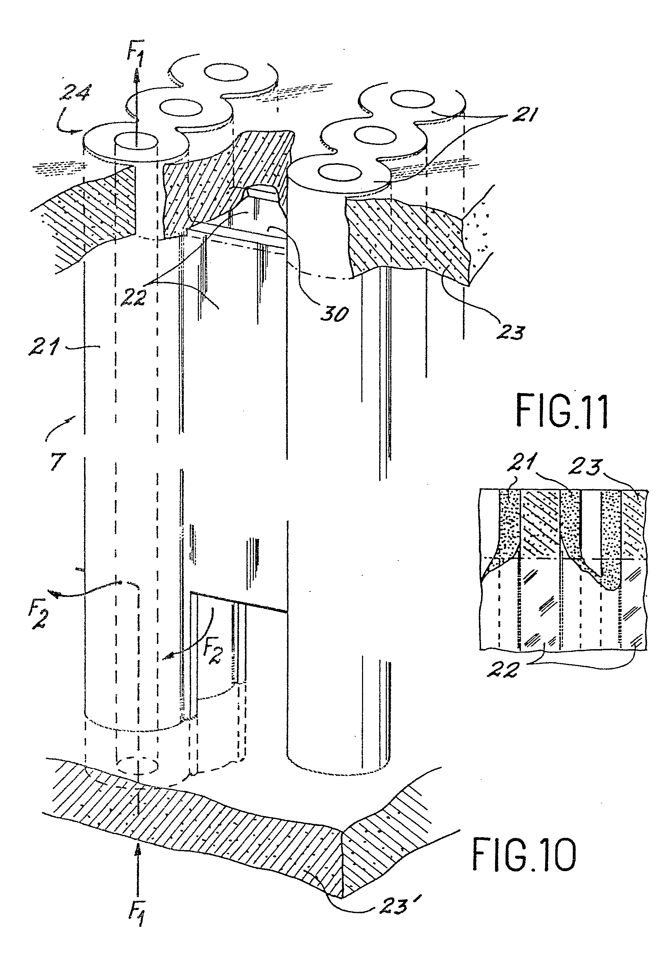

Sur la figure 10, on a représenté en perspective un assemblage de tubes microporeux correspondant au second mode de réalisation de l'invention.

Sur cette figure, on voit que l'assemblage 7 comprend des tubes microporeux 21 disposés parallèlement les uns aux autres et une pluralité de cloisons longitudinales 22 disposées entre les tubes 21 et fixées sur ces derniers.

Ainsi, on définit dans l'assemblage une première série de conduits 24 limités par la paroi interne des tubes microporeux 21 et une deuxième série de conduits 30 délimités par la paroi externe des tubes 21 et par les cloisons 22.

Les tubes 21 sont montés à leur extrémité supérieure sur la plaque 23 et à leur extrémité inférieure sur la plaque 23'. Les cloisons 22 s'étendent longitudinalement de la plaque 23 jusqu'à proximité de la plaque 23', de façon à ménager au voisinage immédiat de la plaque 23' des ouvertures permettant d'assurer l'évacuation du gaz enrichi qui circule dans les seconds conduits 30 délimités entre les tubes 21 par les cloisons 22 et l'extérieur de la paroi des tubes 21.

Bien entendu, les ouvertures destinées à assurer l'évacuation du gaz qui circule dans les seconds conduits 30 peuvent être disposées de façon différente dans l'assemblage 7. Ainsi, les cloisons 22 peuvent s'étendre longitudinalement de la plaque 23 à la plaque 23' et être munies d'ouvertures réparties uniformément entre lesdites plaques.

De préférence, comme illustré sur la figure 10, les ouvertures des seconds conduits 30 sont situées au voisinage immédiat de la plaque d'extrémité 23' de l'assemblage, qui correspond à l'entrée (flèche F₁) dans les tubes 21 du gaz sous haute pression afin de créer dans les seconds conduits 30 un effet de contre-courant en faisant circuler le gaz enrichi (flèche F₂) en sens inverse du mélange gazeux qui circule dans les tubes microporeux 21.

Le montage de l'assemblage 7 sur les plaques 3 et 5 de l'enceinte 1 est réalisé par l'intermédiaire des plaques d'extrémité 23 et 23' réalisées par exemple en téflon, et solidarisées avec les tubes 21 et les cloisons 22.

Dans ce but, lors de la fabrication de l'assemblage de tubes microporeux 21 réunis par les cloisons 22, on prévoit d'interrompre les cloisons 22 au voisinage de l'extrémité des tubes de façon que l'on puisse introduire ensuite l'extrémité des tubes 21 dans les ouvertures correspondantes des plaques de téflon 23 et 23' usinées au préalable; de la sorte, les plaques 23 et 23' peuvent être en appui, comme représenté sur la figure 11, sur les cloisons 22, l'étanchéité entre les tubes 21, les cloisons 22 et les plaques 23 et 23' étant ensuite réalisée par coulée de téflon sur les plaques 23 et 23'.

L'étanchéité peut aussi être réalisée par coulée d'une matière résistant à la corrosion des produits fluorés, par exemple au moyen d'un verre phosphaté tel que le P 106.

Bien entendu, lorsque les cloisons 22 doivent être interrompues au voisinage d'une plaque d'extrémité pour ménager des ouvertures dans les seconds conduits, on monte la plaque d'extrémité correspondante sur les tubes 21 sans la mettre en appui sur les cloisons 22, et on réalise ensuite uniquement une étanchéité entre les tubes 21 et la plaque d'extrémité.

De même, on peut réaliser le montage de l'assemblage 7 sur les plaques 3 et 5 par l'intermédiaire d'un embout métallique fixé à chaque extrémité de l'assemblage et serti ensuite dans les ouvertures correspondantes des plaques 3 et 5.

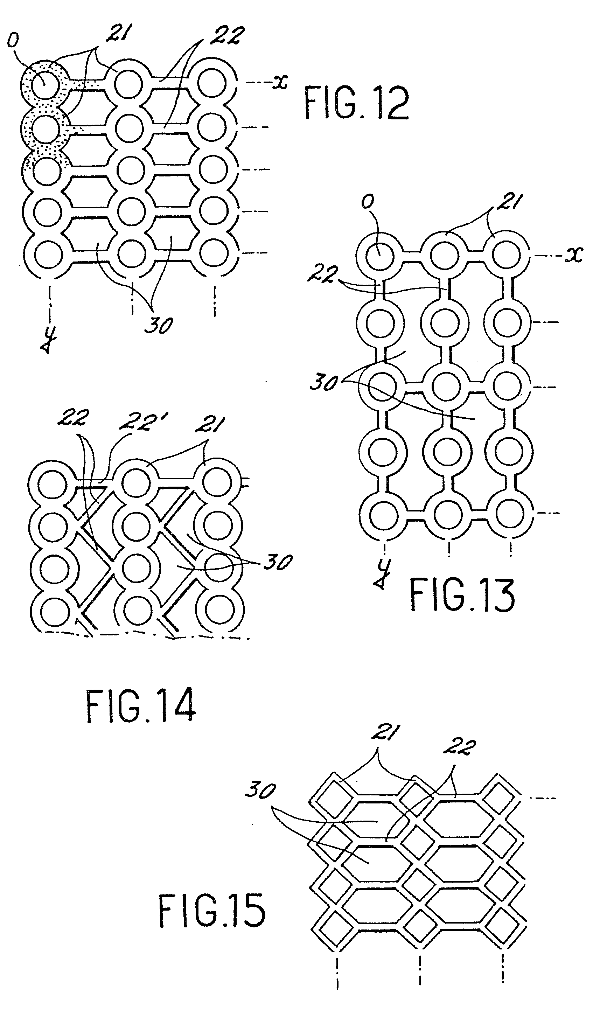

En se reportant maintenant aux figures 12 à 15, on peut voir différents exemples d'assemblages de tubes microporeux de section circulaire ou de section carrée.

Sur la figure 12, on a représenté une vue partielle en coupe horizontale d'un assemblage de tubes à section circulaire dans lequel les tubes sont répartis selon un pas rectangulaire.

Dans cet assemblage, les tubes microporeux 21 sont répartis en rangées parallèles, selon deux directions orthogonales OX et OY. Les tubes 21 des rangées parallèles à la direction OY sont en contact tangentiel les uns avec les autres, tandis que les tubes 21 des rangées parallèles à la direction OX sont espacés régulièrement les uns des autres dans chaque rangée, deux tubes adjacents d'une rangée étant réunis par des cloisons 22 parallèles à la direction OX.

A titre d'exemple, on peut assembler de cette façon deux cents tubes microporeux ayant un diamètre interne de 1 mm et un diamètre externe de 1,5 mm avec des cloisons d'une longueur de 1,5 mm et d'une épaisseur de 0,3 mm.

L'assemblage ainsi obtenu présente une section de 2,85 cm sur 3 cm de côté et comprend des rangées de dix tubes selon la direction OX et de vingt tubes selon la direction OY. Le rapport de la section transversale des premiers conduits délimités à l'intérieur des tubes 9 et des seconds conduits délimités par les cloisons et la paroi externe des tubes 9 est de 3,48.

Sur la figure 13, on a représenté une vue partielle en coupe horizontale d'un assemblage de tubes à section circulaire dans lequel les tubes microporeux sont répartis selon un pas carré.

Dans cet assemblage, les tubes microporeux 21 sont répartis en rangées parallèles à deux directions orthogonales OX et OY; les tubes 21 des rangées parallèles à la direction OY sont régulièrement espacés les uns des autres et des cloisons 22 parallèles à la direction OY sont prévues entre deux tubes adjacents de chaque rangée; les tubes 21 des rangées parallèles à la direction OX sont régulièrement espacés les uns des autres et des cloisons 22 parallèles à la direction OX sont prévues dans une rangée sur deux des tubes parallèles à la direction OX, de façon à réunir deux tubes adjacents d'une même rangée.

A titre d'exemple, on a assemblé de cette façon 169 tubes microporeux ayant un diamètre interne de 1 mm, un diamètre externe de 1,50 mm, avec des cloisons de 0,75 mm de longueur et de 0,3 mm d'épaisseur. Dans cet assemblage, le rapport de la section transversale des seconds conduits à la section transversale des premiers conduits est de 6,45.

Un tel assemblage comportant 169 tubes présente une section carrée de 2,85 cm de côté, chaque rangée de tube parallèle à la direction OX ou à la direction OY étant constituée de treize tubes.

Sur la figure 14, on a représenté une vue partielle en coupe horizontale d'un assemblage de tubes à section circulaire dans lequel les tubes sont répartis selon un pas rectangulaire.

Dans cet assemblage, les tubes microporeux 21 sont répartis en rangés parallèles à deux directions orthogonales OX et OY, les tubes 21 des rangées parallèles à la direction OY étant en contact tangentiel les uns avec les autres et les tubes 21 des rangées parallèles à la direction OX étant espacés régulièrement les uns des autres. Dans cet assemblage, les cloisons 22 sont répartis obliquement entre deux rangées successives de tubes parallèles à OY, de façon à réunir un tube d'une rangée parallèle à OX à un tube de la rangée adjacente parallèle à OY. De plus, cet assemblage comprend des cloisons 22' entre tubes adjacents sur les deux rangées de tubes parallèles à OX situées à la périphérie de l'assemblage.

A titre d'exemple, on a assemblé de cette façon deux cents tubes de 1 mm de diamètre interne et de 1,5 mm de diamètre externe, avec des cloisons obliques 22 de 2,12 mm de longueur et des cloisons 22' de 1,5 mm de longueur, toutes les cloisons ayant 0,3 mm d'épaisseur.

Dans cet assemblage, le rapport de la section transversale des seconds conduits 30 délimités entre les tubes 21 par les cloisons 22 à la section transversale des premiers conduits est de 2,86.

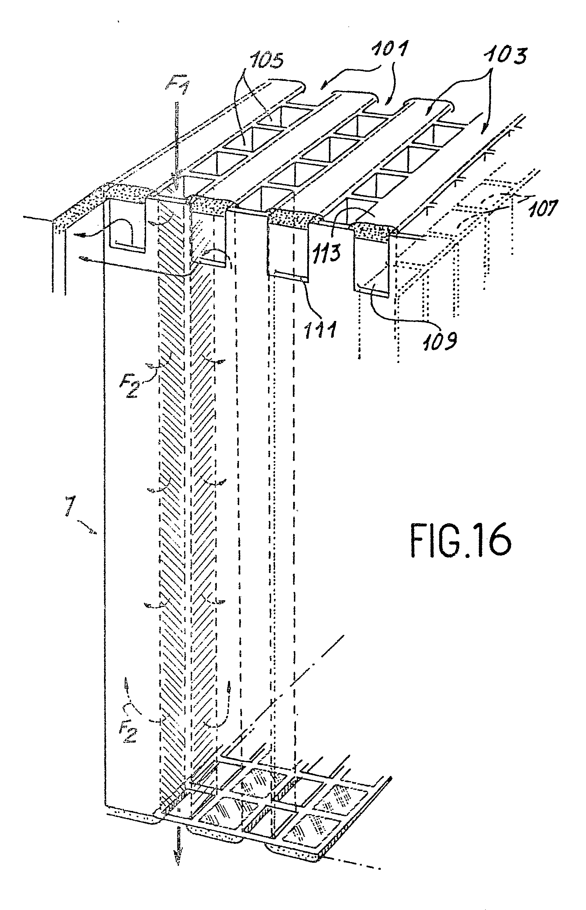

Sur la figure 15, on a représenté une vue partielle en coupe horizontale d'un assemblage de tubes à section carrée répartis selon un pas rectangulaire.

Dans cet assemblage, les tubes microporeux sont répartis selon des rangées parallèles à deux directions orthogonales OX et OY; les tubes 21 des rangées parallèles à la direction OY sont en contact les uns avec les autres par une de leurs arêtes et les tubes 21 des rangées parallèles à la direction OX sont régulièrement espacés les uns des autres, deux tubes adjacents étant réunis par une cloison longitudinale parallèle à la direction OX.

A titre d'exemple, on a assemblé de cette façon deux cents tubes carrés présentant un côté externe de 1,6 mm et un côté interne de 0,46 mm, la longueur des cloisons 22 réunissant deux tubes adjacents d'une rangée parallèle à la direction OX étant de 1,5 mm et son épaisseur de 0,3 mm. Dans cet assemblage, le rapport de la section transversale des second conduits 30 définies par les cloisons 22 et la paroi externe des tubes 21 à la section transversale des conduits définis à l'intérieur des tubes 21 est de 16.

Plusieurs assemblages tels que ceux illustrés sur les figures 12 à 15 peuvent être montés entre les plaques 3 et 5 du dispositif de la figure 1 en ménageant entre chaque assemblage un intervalle de l'ordre de 5 mm pour permettre une évacuation vers la sortie 13 du gaz diffusé sortant de chaque assemblage.

Sur la figure 16, on a représenté un autre type d'assemblage correspondant au troisième mode de réalisation de l'invention.

Sur cette figure, on voit que l'assemblage 7 est constitué par un module alvéolaire dont les parois réalisées en matériau microporeux définissent des rangées de canaux désignées alternativement par les références 101 et 103.

Les canaux des rangées 101 constituent une première série de conduits 105, dits premiers conduits, qui présentent un diamètre hydraulique inférieur à 0,5 cm; les canaux des rangées 103 constituent une seconde série de conduits 107, dits seconds conduits.

On note que dans chaque rangée les canaux ont une section carrée ou rectangulaire et que deux canaux adjacents ont une paroi commune. Dans le première série de conduits 105, on met en circulation le mélange gazeux à séparer (flèche $F_1$) et dans la seconde série de conduits 107, on recueille le gaz séparé par diffusion au travers de la paroi des premiers conduits (flèche $F_2$).

Avantageusement, dans un tel assemblage, les seconds conduits 107 sont obturés à chacune de leurs extrémités et on crée à la partie supérieure du module des ouvertures 109 sur chaque rangée de canaux 107 pour assurer l'évacuation du gaz séparé au niveau des parois latérales du module.

De telles ouvertures peuvent être réalisées de la façon suivante. Après fabrication du module, on réalise sur les rangées de canaux 103 des encoches telles que 111, par exemple par usinage au moyen d'un outil approprié, puis on obture les parties supérieures du module qui correspondent aux rangées 103, en les recouvrant d'un matériau étanche 113. Ainsi, on peut assurer l'évacuation du gaz diffusé par les parois latérales du module, et mettre en circulation le mélange gazeux à séparer dans les conduits 105 en l'introduisant à la partie supérieure du module.

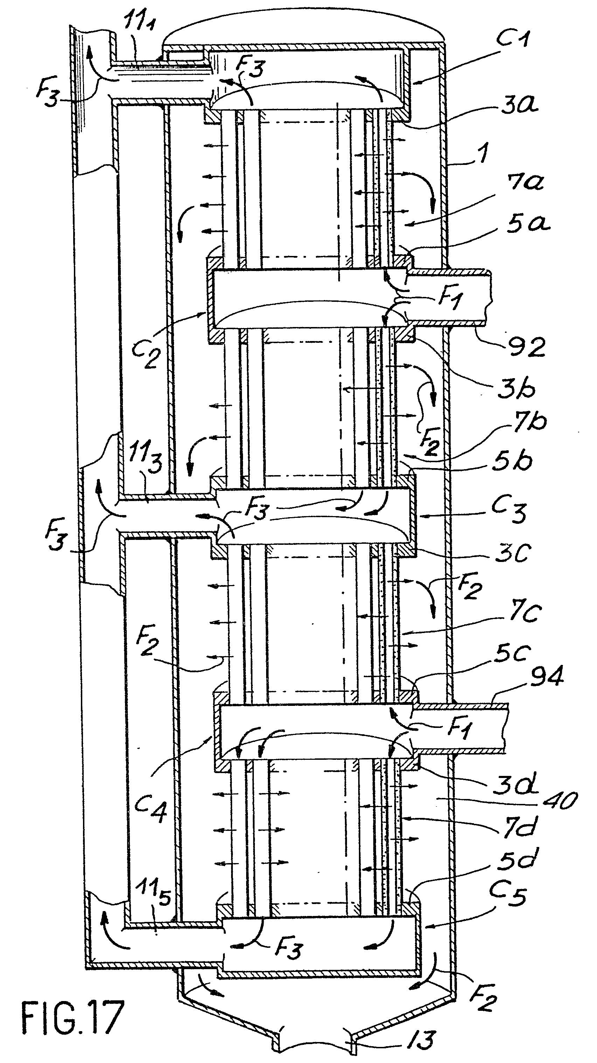

Sur la figure 17, on a représenté en perspective un dispositif de séparation isotopique comportant plusieurs assemblages de tubes microporeux.

Ce dispositif comprend une enceinte cylindrique 1 d'axe vertical dans laquelle sont disposés verticalement à la suite l'un de l'autre quatre assemblages de tubes capillaires microporeux 7a, 7b, 7c, 7d.

Chacun des assemblages de tubes microporeux est monté entre deux plaques, dites plaques de diffuseurs, telles que 3a et 5a . . . 3d et 5d.

Ces assemblages sont séparés les uns des autres de façon à ménager entre deux assemblages voisins tels que 7a et 7b et à chacune des extrémités de l'enceinte des chambres successives $C_1$, $C_2$, $C_3$, $C_4$, et $C_5$.

On note que les chambres $C_2$, $C_3$ et $C_4$ sont délimitées par les plaques de diffuseurs de deux assemblages voisins, par exemple la chambre $C_2$, par les plaques 5a et 3b des assemblages voisins 7a et 7b et qu'elles sont en communication avec les tubes de ces deux assemblages.

Au contraire, les chambres d'extrémité $C_1$ et $C_5$ sont seulement en communication avec les tubes d'un seul assemblage tel que 7a ou 7d.

Les chambres successives $C_1$ à $C_5$ constituent alternativement des chambres de distribution du mélange gazeux à séparer et des chambres de collection du mélange gazeux sortant des tubes des assemblages.

Ainsi, les chambres $C_2$ et $C_4$ constituent des chambres de distribution qui permettent respectivement de distribuer dans les tubes microporeux de deux assemblages voisins 7a, 7b et 7c, 7d le mélange gazeux à séparer; de même, les chambres $C_1$, $C_3$ et $C_5$ constituent des chambres de collection, la chambre $C_3$ étant destinée à collecter le mélange gazeux sortant des tubes de deux assemblages voisins 7b et 7c, et les chambres $C_1$ et $C_5$ assurant seulement la collection du gaz sortant respectivement des assemblages 7a et 7d.

Le mélange gazeux à séparer par diffusion au travers des tubes microporeux des différents assemblages du dispositif est introduit par des canalisations $9_2$, $9_4$ dans les chambres $C_2$ et $C_4$; ce gaz passe ensuite en suivant le trajet des flèches $F_1$ dans les tubes microporeux de chacun des assemblages du dispositif et il est recueilli dans les chambres de collection $C_1$, $C_3$, $C_5$ (flèche $F_3$) puis évacué de l'appareil par des canalisations d'extraction $11_1$, $11_3$, $11_5$.

Par passage dans les tubes capillaires des assemblages 7a à 7d, le mélange gazeux est séparé par diffusion en suivant le trajet des flèches $F_2$ au travers de la paroi des tubes en une fraction enrichie qui est collectée en suivant le trajet des flèches $F_2$ dans un espace annulaire de collection 40 situé à la périphérie de l'enceinte, puis évacuée de cet espace de collection par une canalisation 13 située à la base de l'enceinte.

On précise que dans un tel dispositif, les assemblages tels que 7a à 7d peuvent comprendre un ou plusieurs faisceaux dans lesquels les tubes capillaires microporeux sont montés de façon étanche directement sur les plaques de diffuseur 3a et 5a, 3b et 5b, etc... ou dans lesquels les tubes microporeux sont assujettis à chacune de leurs extrémités à des plaques de faisceaux par l'intermédiaire desquelles ils sont montés sur les plaques de diffuseurs comme cela a été décrit précédemment (fig. 5 et 6).

A titre d'exemple, on a réalisé un dispositif de ce type dans lequel ont été mis en place quatre assemblages comprenant chacun 750 000 tubes capillaires microporeux de section circulaire ayant un diamètre interne de 1 mm, un diamètre externe de 1,5 mm, une longueur de 1,50 m, une porosité de 20%, une perméabilité à l'air de $40 \cdot 10^{-7}$ mole/cm² $\times$ mn $\times$ cm de Hg et un rayon de pores moyen de 100 Å. Ces assemblages sont disposés dans une enceinte cylindrique ayant un diamètre extérieur de 2,7 m et une longueur totale de 9,50 m, les chambres successive ayant une hauteur de 70 cm. On note que le débit total de gaz susceptible d'être traité dans une installation de ce type est de 99 kg d'hexafluorure d'uranium par seconde, les débits d'entrée dans chaque assemblage étant de 24,75 kg d'hexafluorure d'uranium par seconde, cet hexafluorure d'uranium étant séparé dans chaque assemblage en une fraction appauvrie d'un débit de 12,375 kg/s par assemblage et en une fraction enrichie d'un débit de 12,375 kg/s par assemblage.

On constate ainsi qu'une installation de ce type permet d'assurer la séparation isotopique d'un débit important d'hexafluorure d'uranium.

**Revendications**

1. Procédé de séparation isotopique par diffusion gazeuse, caractérisé en ce qu'on utilise pour ladite séparation des tubes capillaires microporeux présentant un diamètre hydraulique D inférieur à 0,5 cm, et en ce que l'on met en circulation le mélange gazeux à séparer dans lesdits tubes de façon à établir dans ces derniers un écoulement tel que le nombre de Reynolds à l'entrée des dits tubes soix inferieur à 4000 et superieur à 200.

2. Procédé selon la revendication 1, caractérisé en ce que l'on met en, circulation ledit mélange gazeux de façon à établie un ecoulement en regime laminaire dudir mélange, le nombre de Reynolds à l'entrée desdits tubes ètant inférieur à 2000 et supérieur à 200.

3. Procédé selon la revendication 1, caractérisé en ce que l'on utilise des tubes microporeux ayant un rayon moyen de pores inférieur à 200 Å.

4. Dispositif pour la mise en oeuvre du procédé selon l'une quelconque des revendications 1 à 3, caractérisé en ce qu'il comprend au moins un assemblage (7) de tubes capillaires microporeux présentant un diamètre hydraulique D inférieur à 0,5 cm.

5. Dispositif selon la revendication 4, caractérisé en ce que lesdits tubes ont un rayon moyen de pores inférieur à 200 Å.

6. Dispositif selon l'une quelconque des revendications 4 et 5, caractérisé en ce que lesdits tubes ont une épaisseur comprise entre 20 et 500 microns.

7. Dispositif selon l'une quelconque des revendications 4 à 6 caractérisé en ce que lesdits tubes ont une longueur d'au moins 25 cm.

8. Dispositif selon l'une quelconque des revendications 4 à 7, caractérisé en ce que lesdits tubes ont une porosité comprise entre 10 et 60% et une perméabilité à l'air comprise entre $10 \cdot 10^{-7}$ et $100 \cdot 10^{-7}$ mole/cm$^2 \times$ mn $\times$ cm de mercure.

9. Dispositif selon l'une quelconque des revendications 4 à 8, caractérisé en ce que lesdits tubes sont en matériau inorganique choisi dans le groupe comprenant l'alumine, la magnésie, l'oxyde de titane, la silice, l'oxyde de chrome, les oxydes mixtes d'aluminium et de magnésium, le nickel et les fluorures métalliques.

10. Dispositif selon la revendication 9, caractérisé en ce que lesdits tubes sont en fluorure de magnésium et de nickel.

11. Dispositif selon l'une quelconque des revendications 4 à 10, caractérisé en ce que lesdits tubes sont en matériau organique.

12. Dispositif selon la revendication 11, caractérisé en ce que lesdits tubes sont en polytétrafluoroéthylène.

13. Dispositif selon l'une quelconque des revendications 4 à 12, caractérisé en ce que lesdits tubes ont une section transversale circulaire.

14. Dispositif selon l'une quelconque des revendications 4 à 12 caractérisé en ce que lesdits tubes ont une section carrée ou rectangulaire.

15. Dispositif selon l'une quelconque des revendications 4 à 14, caractérisé en ce que ledit assemblage est constitué de tubes capillaires microporeux (21) disposés parallèlement les uns aux autres et assujettis à chacune de leurs extrémités à une plaque (23), dite plaque d'assemblage, lesdits tubes étant répartis dans ledit assemblage selon des rangées parallèles à une direction donnée, dite première direction, en formant également des rangées parallèles à une deuxième direction perpendiculaire à ladite première direction.

16. Dispositif selon la revendication 15, caractérisé en ce que les tubes capillaires microporeux ont une section transversale circulaire et en ce que les tubes de chaque rangée parallèle à la première direction sont en contact tangentiel les uns avec les autres.

17. Dispositif selon la revendication 15, caractérisé en ce que les tubes capillaires microporeux sont régulièrement espacés les uns des autres dans chacune des rangées parallèles à la première ou à la seconde direction.

18. Dispositif selon l'une quelconque des revendications 4 à 14, caractérisé en ce que ledit assemblage est constitué de tubes microporeux (21) disposés parallèlement les uns aux autres et formant dans ledit assemblage une première série de conduits (24), dits premiers conduits, délimités par la paroi interne desdits tubes, et en ce que l'assemblage comprend une pluralité de cloisons longitudinales (22) solidaires d'au moins certains desdits tubes et répartis entre lesdits tubes de façon à délimiter avec la paroi externe de ces derniers une seconde série de conduits (30), dits seconds conduits, parallèles aux premiers conduits.

19. Dispositif selon la revendication 18, caractérisé en ce que les tubes (21) dudit assemblage étant montés sur des plaques, lesdites cloisons (22) s'étendent de l'une à l'autre desdites plaques et elles présentent des ouvertures pour assurer l'évacuation du gaz séparé circulant dans lesdits seconds conduits.

20. Dispositif selon la revendication 18, caractérisé en ce que les tubes (21) dudit assemblage étant montés sur deux plaques, lesdites cloisons (22) s'étendent de l'une desdites plaques jusqu'à proximité de l'autre desdites plaques de façon à ménager au voisinage de l'autre desdites plaques des ouvertures pour assurer l'évacuation du gaz séparé circulant dans lesdits seconds conduits.

21. Dispositif selon l'une quelconque des revendications 18 à 20, caractérisé en ce que lesdits tubes (21) et lesdites cloisons (22) sont agencés entre eux de façon telle que lesdits seconds conduits (30) aient tous la même section transversale.

22. Dispositif selon la revendication 20, caractérisé en ce que le rapport de la section transversale desdits seconds conduits (30) à la section transversale desdits premiers conduits est compris entre 1 et 20.

23. Dispositif selon l'une quelconque des revendications 18 à 22, caractérisé en ce que lesdites cloisons (22) sont réalisées dans le même matériau que lesdits tubes.

24. Dispositif selon l'une quelconque des revendications 18 à 23, caractérisé en ce que lesdits tubes (21) ont une section circulaire et en ce qu'ils sont disposés dans ledit assemblage selon des rangées parallèles, les tubes de chaque rangée étant en contact tangentiel les uns avec les autres et lesdites cloisons longitudinales (22) étant réparties entre deux rangées adjacentes de tubes.

25. Dispositif selon l'une quelconque des revendications 18 à 23, caractérisé en ce que lesdits tubes (21) ont une section carrée ou rectangulaire et en ce qu'ils sont disposés dans ledit assemblage selon des rangées parallèles, les tubes de chaque rangée étant en contact les uns avec les autres par une de leurs arêtes et lesdites cloisons longitudinales (22) étant réparties entre deux rangées adjacentes de tubes.

26. Diapositif selon l'une quelconque des revendications 4 à 12 caractérisé en ce que ledit assemblage est constitué par un module alvéolaire dont les parois réalisées en matériau microporeux ayant un rayon moyen de pores inférieur à 200 Å, définissent des rangées (101, 103) de canaux parallèles ayant une section transversale carrée ou rectangulaire, lesdites rangées constituant alternativement une première série de conduits (105), dits premiers conduits, qui présentent un diamètro hydraulique inférieur à 0,5 cm et dans lesquels on met en circulation le mélange gazeux à séparer, et une deuxième série de conduits (107), dits seconds conduits, dans lesquels on recueille le gaz séparé par diffusion au travers de la paroi desdits premiers conduits.

27. Dispositif selon la revendication 26, caractérisé en ce que ces seconds conduits sont obturés à chacune de leurs extrémités, des ouvertures (109) étant ménagées dans chaque rangée desdits second conduits (103) de façon à assurer l'évacuation du gaz séparé par les parois latérales du module.

28. Dispositif selon l'une quelconque des revendications 14 à 27, caractérisé en ce qu'il comprend une enceinte cylindrique (1) dans laquelle sont disposés à la suite l'un de l'autre une pluralité d'assemblages (7a, 7b, 7c, 7d) de tubes microporeux parallèles à l'axe de l'enceinte, lesdits assemblages étant montés chacun entre deux plaques (3a, 5a) dites plaques de diffuseurs et séparés les uns des autres de façon à ménager entre deux assemblages voisins (7a, 7b) et à chacune des extrémités de l'enceinte des chambres successives (C₁, C₂ ... C₅) qui constituent alternativement des chambres de distribution (C₂, C₄) du mélange gazeux à séparer dans les tubes microporeux débouchant dans ces dernières et des chambres de collection (C₁, C₃, C₅) du gaz sortant des tubes débouchant dans ces dernières, des moyens pour alimenter lesdites chambres de distribution en mélange gazeux à séparer, des moyens pour extraire desdites chambres de collection le gaz sortant des tubes desdits assemblages et des moyens pour recueillir le gaz ayant diffusé au travers de la paroi des tubes de chacun desdits assemblages.

## Patentansprüche

1. Verfahren zur Isotopentrennung durch Gasdiffusion, dadurch gekennzeichnet, daß man für diese Trennung mikroporöse Kapillarröhren mit einem hydraulischen Durchmesser D von weniger als 0,5 cm verwendet und daß man die zu trennende Gasmischung in den Röhren derart strömen läßt, daß in ihnen eine Strömung derart erzeugt wird, daß die Reynold-Zahl am Einlaß der Röhren kleiner als 4000 und größer als 200 ist.

2. Verfahren nach Anspruch 1, dadurch gekennzeichnet, daß man die Gasmischung so strömen läßt, daß eine Strömung im laminaren Bereich der Mischung vorliegt, wobei die Reynold-Zahl am Einlaß der Röhren kleiner als 2000 und größer als 200 ist.

3. Verfahren nach Anspruch 1, dadurch gekennzeichnet, daß man mikroporöse Röhren mit einem mittleren Porenradius von weniger als

200 Å verwendet.

4. Vorrichtung zur Durchführung des Verfahrens nach einem der Ansprüche 1 bis 3, dadurch gekennzeichnet, daß sie wenigstens einen Zusammenbau (7) von mikroporösen Kapillarröhren umfaßt, die einen hydraulischen Durchmesser D von weniger als 0,5 cm haben.

5. Vorrichtung nach Anspruch 4, dadurch gekennzeichnet, daß die Röhren einen mittleren Porenradius von weniger als 200 Å haben.

6. Vorrichtung nach Anspruch 4 oder 5, dadurch gekennzeichnet, daß die Röhren eine Dicke zwischen 20 und 500 μm haben.

7. Vorrichtung nach einem der Ansprüche 4 bis 6, dadurch gekennzeichnet, daß die Röhren eine Länge von mindestens 25 cm aufweisen.

8. Vorrichtung nach einem der Ansprüche 4 bis 7, dadurch gekennzeichnet, daß die Röhren eine Porösität zwischen 10 und 60% und eine Durchlässigkeit für Luft zwischen $10 \cdot 10^{-7}$ und $100 \cdot 10^{-7}$ mol/cm² × mn × cm Hg aufweisen.

9. Vorrichtung nach einem der Ansprüche 4 bis 8, dadurch gekennzeichnet, daß die Röhren aus einem anorganischen Material bestehen, welches aus der Aluminiumoxid, Magnesiumoxid, Titanoxid Silicium(di)oxid, Chromoxid, gemischte Aluminium- und Magnesiumoxide, Nickel und metallische Fluoride umfassenden Gruppe ausgewählt ist.

10. Vorrichtung nach Anspruch 9, dadurch gekennzeichnet, daß die Röhren aus Magnesium- und Nickelfluorid bestehen.

11. Vorrichtung nach einem der Ansprüche 4 bis 10, dadurch gekennzeichnet, daß die Röhren aus einem organischen Material bestehen.

12. Vorrichtung nach Anspruch 11, dadurch gekennzeichnet, daß die Röhren aus Polytetrafluoräthylen bestehen.

13. Vorrichtung nach einem der Ansprüche 4 bis 12, dadurch gekennzeichnet, daß die Röhren einen kreisförmigen Querschnitt aufweisen.

14. Vorrichtung nach einem der Ansprüche 4 bis 12, dadurch gekennzeichnet, daß die Röhren einen quadratischen oder rechteckförmigen Querschnitt aufweisen.

15. Vorrichtung nach einem der Ansprüche 4 bis 14, dadurch gekennzeichnet, daß der Zusammenbau aus mikroporösen Kapillarröhren (21) gebildet ist, die parallel zueinander angeordnet und jeweils mit ihren Enden an einer mit Zusammenbauplatte bezeichneten Platte (23) befestigt sind, und daß die Röhren bei diesem Zusammenbau in parallele Reihen mit einer vorgegebenen Richtung, welche als erste Richtung bezeichnet wird, aufgeteilt sind, wobei sie ebenfalls parallele Reihen in einer zweiten Richtung bilden, welche senkrecht zu der ersten Richtung verläuft.

16. Vorrichtung nach Anspruch 15, dadurch gekennzeichnet, daß die mikroporösen Kapillarröhren einen kreisförmigen Querschnitt aufweisen und daß sich die Röhren einer jeden zu der ersten Richtung parallelen Reihe in tangentialer Berührung miteinander befinden.

17. Vorrichtung nach Anspruch 15, dadurch gekennzeichnet, daß die mikroporösen Kapillarröhren in jeder der zu der ersten oder der zweiten Richtung parallelen Reihen gleichmäßig voneinander beabstandet sind.

18. Vorrichtung nach einem der Ansprüche 4 bis 14, dadurch gekennzeichnet, daß der Zusammenbau von mikroporösen Röhren (21) gebildet ist, welche parallel zueinander angeordnet sind und bei diesem Zusammenbau eine erste Reihe von Leitungen (24) bilden, welche als erste Leitungen bezeichnet und durch die innere Wand der Röhren begrenzt sind, und daß der Zusammenbau eine Vielzahl von Längswänden (22) umfaßt, die wenigstens mit gewissen der Röhren fest verbunden und zwischen den Röhren derart aufgeteilt sind, daß sie mit der Außenwand der Röhren eine zweite Reihe von Leitungen (30) begrenzen, welche als zweite Leitungen bezeichnet und parallel zu den ersten Leitungen sind.

19. Vorrichtung nach Anspruch 18, dadurch gekennzeichnet, daß die Röhren (21) des Zusammenbaus an Platten befestigt sind und daß sich die Wände (22) von einer zur anderen der Platten erstrecken und Öffnungen aufweisen, um das Ausbringen von getrenntem Gas sicherzustellen, welches in den zweiten Leitungen strömt.

20. Vorrichtung nach Anspruch 18, dadurch gekennzeichnet, daß die Röhren (21) des Zusammenbaus an zwei Platten befestigt sind und daß sich die Wände (22) von einer der Platten bis in die Nähe der anderen Platte derart erstrecken, daß sie nahe der anderen Platte Öffnungen freilassen, um das Ausbringen von getrenntem Gas sicherzustellen, welches in den zweiten Leitungen strömt.

21. Vorrichtung nach einem der Ansprüche 18 bis 20, dadurch gekennzeichnet, daß die Röhren (21) und die Wände (22) zueinander so angeordnet sind, daß die zweiten Leitungen (30) alle den gleichen Querschnitt aufweisen.

22. Vorrichtung nach Anspruch 20, dadurch gekennzeichnet, daß das Verhältnis des Querschnittes der zweiten Leitungen (30) zu dem Querschnitt der ersten Leitungen zwischen 1 und 20 liegt.

23. Vorrichtung nach einem der Ansprüche 13 bis 22, dadurch gekennzeichnet, daß die Wände (22) aus dem gleichen Material wie die Röhren hergestellt sind.

24. Vorrichtung nach einem der Ansprüche 18 bis 23, dadurch gekennzeichnet, daß die Röhren (21) einen kreisförmigen Querschnitt aufweisen und in diesem Zusammenbau in parallelen Reihen angeordnet sind, wobei sich die Röhren einer jeden Reihe miteinander in tangentialer Berührung befinden und die Längswände (22) zwischen zwei benachbarten Reihen von Röhren verteilt sind.

25. Vorrichtung nach einem der Ansprüche 18 bis 23, dadurch gekennzeichnet, daß die Röhren (21) einen quadratischen oder rechteckförmigen Querschnitt aufweisen und in dem Zusammenbau in parallelen Reihen angeordnet sind, wobei die Röhren einer jeden Reihe miteinander über ihre Ränder in Berührung stehen und die Längswände (22) zwischen zwei benachbarten Reihen von Röhren verteilt sind.

26. Vorrichtung nach einem der Ansprüche 4 bis 12, dadurch gekennzeichnet, daß der Zusammenbau von einem zellenförmigen Modul gebildet ist, dessen Wände aus einem mikroporösen Material mit einem mittleren Porenradius von weniger als 200 Å hergestellt sind und Reihen (101, 103) von parallelen Kanälen mit quadratischem oder rechteckförmigem Querschnitt begrenzen, und daß die Reihen abwechselnd eine erste Reihe von Leitungen (105), welche als erste Leitungen bezeichnet sind und einen hydraulischen Durchmesser von weniger als 0,5 cm aufweisen und in denen man eine Strömung der zu trennenden Gasmischung hervorruft, und eine zweite Reihe von Leitungen (107) bilden, welche zweite Leitungen genannt sind und in denen man das durch Diffusion durch die Wand der ersten Leitungen getrennte Gas sammelt.

27. Vorrichtung nach Anspruch 26, dadurch gekennzeichnet, daß die zweiten Leitungen an jedem ihrer Enden verschlossen sind und daß Öffnungen (109) in jeder Reihe der zweiten Leitungen (103) derart ausgebildet sind, daß das Ausbringen von durch die seitlichen Wände des Moduls getrenntem Gas sichergestellt ist.

28. Vorrichtung nach einem der Ansprüche 14 bis 27, dadurch gekennzeichnet, daß sie eine zylinderförmige Kammer (1) aufweist, in der aufeinanderfolgend eine Vielzahl von Zusammenbauanordnungen (7a, 7b, 7c, 7d) von zur Achse der Kammer parallelen mikroporösen Röhren angeordnet ist, daß die Zusammenbauanordnungen jeweils zwischen zwei Platten (3a, 5a), welche als Diffusorplatten bezeichnet sind, befestigt und voneinander derart getrennt sind, daß zwischen zwei benachbarten Zusammenbauanordnungen (7a, 7b) und an jedem der Enden der Kammer aufeinanderfolgende Kammern ($C_1$, $C_2$ ... $C_5$) freigelassen sind, welche abwechselnd Verteilerkammern ($C_2$, $C_4$) der in den mikroporösen Röhren zu trennenden Gasmischung, welche in diese Kammern münden, und Sammelkammern ($C_1$, $C_3$, $C_5$) für das Gas bilden, welches aus den die Sammelkammern mündenden Röhren austritt und daß Mittel zum Versorgen der Verteilerkammern mit zu trennender Gasmischung und Mittel zum Ausbringen von Gas aus den Sammelkammern, das aus den Röhren der Zusammenbauanordnung austritt, und Mittel vorgesehen sind, um das Gas aufzunehmen, welches quer durch die Wand der Röhren einer jeden der Zusammenbauanordnungen diffundiert ist.

## Claims

1. Process for isotopic separation by gaseous diffusion, characterized in that microporous capillary tubes having a hydraulic diameter D of less than 0.5 cm. are employed for said separation, and in that the gaseous mixture to be separated is circulated through said tubes in such a manner as to establish therein a flow such that the Reynolds Number at the inlet of said tubes is less than 4000 and greater than 200.

2. Process according to claim 1 characterized in that the gaseous mixture is circulated in such a manner as to establish a laminar flow for the mixture, the Reynolds Number at the inlet of said tubes being less than 2000 and greater than 500.

3. Process according to claim 1 characterized in that microporous tubes having an average pore radius of less than 200 Å are employed.

4. Apparatus for carrying out a process according to any one of claims 1 to 3 characterized in that it comprises at least one assembly (7) of microporous capillary tubes having a hydraulic diameter D of less than 0.5 cm.

5. Apparatus according to claim 4 characterized in that said tubes have an average pore radius of less than 200 Å.

6. Apparatus according to either of claims 4 and 5 characterized in that said tubes have a thickness of between 20 and 500 microns.

7. Apparatus according to any one of claims 4 to 6 characterized in that said tubes have a length of at least 25 cm.

8. Apparatus according to any one of claims 4 to 7 characterized in that said tubes have a porosity of between 10 and 60% and a permeability to air of between $10 \cdot 10^{-7}$ and $100 \cdot 10^{-7}$ mole/$cm^2 \times mn \times cm$. of mercury.

9. Apparatus according to any one of claims 4 to 8 characterized in that said tubes are made from an inorganic material selected from the group comprising alumina, magnesia, titanium oxide, silica, chromium oxide, mixed oxides of aluminium and magnesium, nickel and metal fluorides.

10. Apparatus according to claim 9 characterized in that said tubes are made from magnesium or nickel fluoride.

11. Apparatus according to any one of claims 4 to 10 characterized in that said tubes are made from an organic material.

12. Apparatus according to claim 11 characterized in that said tubes are made from poly tetrafluoroethylene.

13. Apparatus according to any one of claims 4 to 12 characterized in that said tubes have a circular cross section.

14. Apparatus according to any one of claims 4 to 12 characterized in that said tubes have a square or rectangular section.

15. Apparatus according to any one of claims 4 to 14 characterized in that said assembly is made up of microporous capillary tubes (21) disposed parallel to one another and fixed at each of their ends to a plate (23), hereinafter called the assembly plate, said tubes being arranged in said assembly in ranks parallel to a given direction, hereinafter called the the first direction, and also forming ranks parallel to a second direction perpendicular to said first direction.

16. Apparatus according to claim 15 characterized in that the microporous capillary tubes have a circular cross section and in that the tubes in each rank parallel to the first direction are in tangential contact with one another.

17. Apparatus according to claim 15 characterized in that the microporous capillary tubes are regularly spaced from one another in each of the ranks parallel to the first or second direction.

18. Apparatus according to any one of claims 4 to 14 characterized in that said assembly is made up of microporous tubes (21) disposed parallel to one another and forming in said assembly a first series of conduits (24), hereinafter called first conduits, delimited by the internal wall of said tubes, and in that the assembly comprises a plurality of longitudinal partitions (22) joined to at least some of said tubes and distributed among the tubes whereby to delimit with the external wall of the latter a second series of conduits (30), hereinafter called second conduits, parallel to the first conduits.

19. Apparatus according to claim 18 characterized in that the tubes (21) of said assembly are mounted on plates, said partitions (22) extending from one to another of said plates and having openings to ensure evacuation of separated gas circulating in said second conduits.

20. Apparatus according to claim 18 characterized in that the tubes (21) of said assembly are mounted on two plates, said partitions (22) extending from one of said plates to the vicinity of the other of said plates, whereby to provide, adjacent the other of said plates, openings to ensure the evacuation of separated gas circulating in said second conduits.

21. Apparatus according to any one of claims 18 to 20 characterized in that said tubes (21) and said partitions (22) are so mutually arranged that said second conduits (30) all have the same cross section.

22. Apparatus according to claim 20 characterized in that the cross section of the second conduits and the cross section of the first conduits are in a ratio between 1 and 20.

23. Apparatus according to any one of claims 18 to 22 characterized in that said partitions (22) are made from the same material as said tubes.

24. Apparatus according to any one of claims 18 to 23 characterized in that said tubes (21) have a circular section, and in that they are disposed in said assembly in parallel ranks, the tubes of each rank being in tangential contact with one another and said longitudinal partitions (22) being located between two adjacent ranks of tubes.

25. Apparatus according to any one of claims 18 to 23 characterized in that said tubes (21) have a square or rectangular section and in that they are disposed in said assembly in parallel ranks, the tubes in each rank being in contact with one another along one of their corners, and said longitudinal partions (22) being located between two adjacent ranks of tubes.

26. Apparatus according to any one of claims 4 to 12 characterized in that said assembly comprises a honeycomb module whose walls are made from microporous material having an average pore radius of less than 200 Å, defining ranks (101, 103) of parallel channels having a square or rectangular section said ranks constituting alternately a first series of conduits (105), hereinafter called first conduits, which have a hydraulic diameter of less than 0.5 cm. and in which is circulated the gaseous material to be separated, and a second series of conduits (107), hereinafter called second conduits, in which is received the gas separated by diffusion through the wall of said first conduits.

27. Apparatus according to claim 26 characterized in that the second conduits are closed at each of their ends, openings (109) being formed in each rank of said second conduits (103) whereby to ensure evacuation of separated gas through the side walls of the module.

28. Apparatus according to any one of claims 14 to 27 characterized in that it comprises a cylindrical vessel (1) in which are disposed, one after another, a plurality of assemblies (7a, 7b, 7c, 7d) of microporous tubes parallel to the axis of the vessel, each of said assemblies being mounted between two plates (3a, 5a) called diffuser plates and separated from one another whereby to provide between two adjacent assemblies (7a, 7b) and at each end of the vessel, a series of chambers ($C_1$, $C_2$ ... $C_5$) which alternately constitute chambers ($C_2$, $C_4$) for distribution of gaseous mixture to be separated into the microporous tubes opening into the latter, and chambers ($C_1$, $C_3$, $C_5$) for collection of gas leaving the tubes opening into the latter, means for feeding said distribution chambers with gaseous mixture to be separated, means for extracting from said collection chambers the gas leaving the tubes of said assemblies, and means for collecting gas that has diffused through the walls of the tubes of each of said assemblies.

FIG. 1

FIG. 2

FIG. 3

FIG. 4

FIG. 5

FIG. 6

FIG.7

FIG.8

FIG.9

FIG.11

FIG.10

FIG.12

FIG.13

FIG.14

FIG.15

FIG.16

FIG.17